# EUROPEAN PATENT APPLICATION

(11) **EP 2 144 437 A2**
(43) Date of publication of application: **13.01.2010**
(21) Application number: 09163142.4
(22) Date of filing: 18.06.2009
(51) Int. Cl.: H04N 5/445

(54) **Method for displaying on-screen-display (OSD) items and display apparatus applying the same**

(30) Priority: 10.07.2008 KR 20080066993
(71) Applicant: Samsung Electronics Co., Ltd., Suwon-si, Gyeonggi-do 442-742 (KR)
(72) Inventor: Kim, Won-il, Gyeonggi-do (KR); Lee, Sang-hee, Seoul (KR); Kwon, Yong-hwan, Gyeonggi-do (KR); Kwon, Heui-jin, Gyeonggi-do (KR); Lee, Jeong-yeon, Gyeonggi-do (KR); Park, Mi-ju, Seoul (KR); Hwang, Woo-seok, Seoul (KR); Yoon, Yeo-ri, Gyeonggi-do (KR)
(74) Representative: Brandon, Paul Laurence

(57) **Abstract**

An on-screen-display (OSD) item displaying method and a display apparatus applying the OSD item displaying method. In the method an OSD menu containing a plurality of OSD items is displayed on an OSD menu display area, and when an event occurs, an event OSD item associated with the event may be displayed using the OSD menu display area and a content display area. Therefore, the display apparatus can selectively display the OSD menu on the content display area, which enables a user to more easily recognize important information.

## Description

### CROSS-REFERENCE TO RELATED APPLICATIONS

This application claims priority from Korean Patent Application No. 10-2008-0066993, filed on July 10, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a method and apparatus for displaying on-screen-display (OSD) items, and more particularly, to a method and apparatus for displaying OSD items contained in an OSD menu which provides a user with information.

### 2. Description of the Related Art

Televisions (TVs) provide users with menus using OSD functionality. Accordingly, users are able to select and adjust functions in connection with TV display settings using OSD menus.

Recently, technology by which TVs are able to display information regarding content or data information using OSD functionality has been developed. Accordingly, a variety of information may be displayed using the OSD function.

However, it is difficult for users to distinguish which information is important or urgent on OSD menus due to the large amount of information shown. Additionally, OSD menus do not cover entire TV screens, and thus it is also difficult for users to read OSD menus.

Therefore, there is a need for methods that provide users with an OSD menu, which enables users to easily recognize which information in the OSD menu is important.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for displaying on-screen-display (OSD) items, in addition to an event OSD item associated with a certain event using an OSD menu display area together with a content display area when the event occurs, in order to provide a user with an OSD menu which enables the user to easily recognize which information is important. The present invention also provides a display apparatus applying the method.

According to an aspect of the present invention, there is provided a method by which a display device comprising a content display area and an on-screen-display (OSD) menu display area displays OSD items. The method may comprise displaying an OSD menu containing a plurality of OSD items on the OSD menu display area, and displaying an event OSD item associated with an event of an OSD item among the plurality of OSD items on at least one of the OSD menu display area and content display area when the event occurs. The event OSD item may be displayed based on information received from an information source, such as via broadcasting or the Internet.

The displaying of the event OSD item may comprise displaying the event OSD item on a full screen.

The event OSD item may comprise text, images, or animations which are associated with the event.

The method may further comprise outputting an alarm sound when the event occurs.

The method may further comprise detecting that the OSD item is selected from among the plurality of OSD items, the selection of the OSD item being a first event. The displaying of the event OSD item may comprise displaying an event OSD item containing updated information on content of the selected OSD item on at least one of the OSD menu display area and the content display area, when the first event occurs.

The method may further comprise detecting that information classified by a content provider as a predetermined type of information is received, the receiving the predetermined type of information being a second event. The displaying of the event OSD item may comprise displaying a second event OSD item containing the received information on the at least one of the OSD menu display area and the content display area, when the second event occurs.

The detecting may comprise detecting whether a predetermined period of time has elapsed after the event OSD item has been displayed, the lapse of the predetermined period being a third event. The displaying of the event OSD item may comprise displaying a third event OSD item containing help information regarding the selected OSD item on the at least one of the OSD menu display area and the content display area, when the third event occurs.

According to another aspect of the present invention, there is provided a display device comprising a display unit that displays video content on a content display area and displays an on-screen-display (OSD) menu having a plurality of OSD items on an OSD menu display area, and a control unit that detects an event associated with a first OSD item among the plurality of OSD items and controls the display unit to display an event OSD item associated with the detected event on the at least one of the OSD menu display area and content display area, when the event is detected. The event OSD item may be generated and displayed based on information received from an information source, such as via broadcasting or the Internet.

The control unit may control the event OSD item to be displayed on a full screen of the display unit.

The event OSD item may comprise text, images, or animations which are associated with the event.

The control unit may control an alarm sound to be output when the event occurs.

The control unit may detect whether the first OSD item is selected from among the plurality of OSD items, the selecting the first OSD item being a first event, and may control the display unit to display a first event OSD item containing updated information on content of the first OSD item on the at least one of the OSD menu display area and the content display area, when the first event is detected.

The control unit may detect whether information classified by a content provider as a predetermined type of information is received, the receiving the predetermined type of information being a second event, and may control the display unit to display a second event OSD item containing the received information on the at least one of the OSD menu display area and the content display area, when the second event is detected.

The control unit may detect whether a predetermined period of time has elapsed after the event item has been displayed on the display unit, the lapse of the predetermined period of time being a third event, and may control the display unit to display a third event OSD item containing help information regarding the first OSD item on the at least one of the OSD menu display area and the content display area, when the third event is detected.

According to another aspect of the present invention, there is provided a method by which a display device comprising a content display area and an on-screen-display (OSD) menu display area displays OSD items, the method comprising displaying an OSD menu containing a plurality of OSD items on the OSD menu display area, and enlarging the OSD menu display area and displaying an event OSD item associated with an event of an OSD item among the plurality of OSD items on the enlarged OSD menu display area, when the event occurs. The event OSD item may be generated and displayed based on information received from an information source, such as via broadcasting or the Internet.

The enlarging of the OSD menu display area and displaying of the event OSD item may comprise enlarging the OSD menu display area to cover a full screen of the display device and displaying the event OSD item on the full screen when a certain event occurs.

According to another aspect of the present invention, there is provided a display device comprising a display unit that displays video content on a content display area and displays an on-screen-display (OSD) menu having a plurality of OSD items on an OSD menu display area, and a control unit that detects an event associated with an OSD item among the plurality of OSD items and controls the display unit to enlarge the OSD menu display area and display an event OSD item associated with the detected event on the enlarged OSD menu display area, when the event is detected. The event OSD item may be generated and displayed based on information received from an information source, such as via broadcasting or the Internet.

The control unit may enlarge the OSD menu display area to cover a full screen of the display device and may control the event OSD item to be displayed on the full screen when the event is detected.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 illustrates a television (TV) content providing system according to an exemplary embodiment of the present invention;

FIG. 2 is a detailed block diagram of a TV shown in FIG. 1;

FIG. 3 is a flowchart explaining a process for displaying on-screen-display (OSD) items according to an exemplary embodiment of the present invention;

FIG. 4 is a flowchart explaining a process for displaying updated information according to an exemplary embodiment of the present invention;

FIG. 5 illustrates a screen showing an OSD menu and an OSD item according to an exemplary embodiment of the present invention;

FIG. 6 illustrates an event OSD item containing updated content according to an exemplary embodiment of the present invention;

FIG. 7 illustrates a screen showing an OSD menu and an OSD item according to another exemplary embodiment of the present invention; and

FIG. 8 illustrates an event OSD item associated with an event regarding the OSD item according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those certainly defined matters. Also, well-known functions or constructions are not described in detail since they would obscure the invention with unnecessary detail.

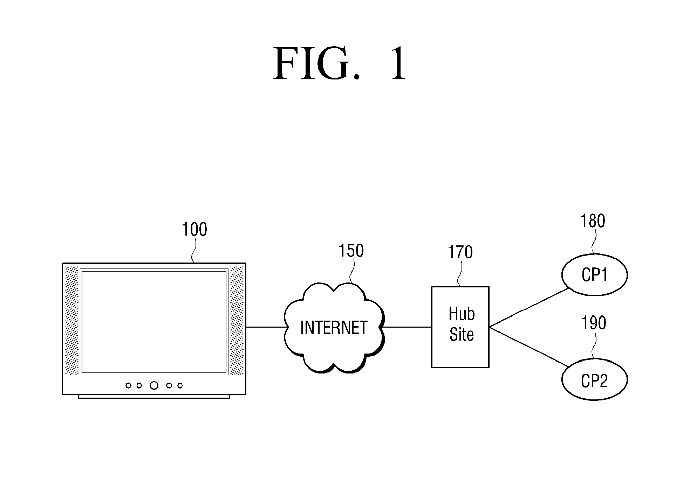

FIG. 1 illustrates a television (TV) content providing system according to an exemplary embodiment of the present invention. The TV content providing system of FIG. 1 includes a TV 100, a network such as the Internet 150, a hub site 170, a first content provider (CP) 180 and a second CP 190.

The TV 100 is connected to the hub site 170 via the Internet 150. The TV 100 receives multimedia content, such as moving images or music, and data information, such as stock reports or weather reports, from the hub site 170.

The hub site 170 receives content from the first CP 180 and second CP 190, and makes a database of the received content. The hub site 170 manages the content and transmits the content to the TV 100 connected via the Internet 150.

The hub site 170 refers to a server operated by a manufacturer who manufactures the TV 100 in order to provide users who purchased the TV 100 with content services. Accordingly, the hub site 170 receives content from an external CP.

The first CP 180 and second CP 190 function to provide their respective content to the hub site 170. For example, if the first CP 180 is 'naver.com', the hub site 170 may be provided with weather reports or stock reports. Additionally, if the second CP 190 is 'youtube.com', the hub site 170 may be provided with multimedia content such as moving images or music.

While the first CP 180 and second CP 190 provide content or information to the hub site 170 in the exemplary embodiment of the present invention, the present invention is also applicable to providers capable of providing content or information to the hub site 170 rather than the first CP 180 and second CP 190.

Therefore, it is possible to provide a user with a variety of information and multimedia content from the hub site 170 through the TV content providing system as described above.

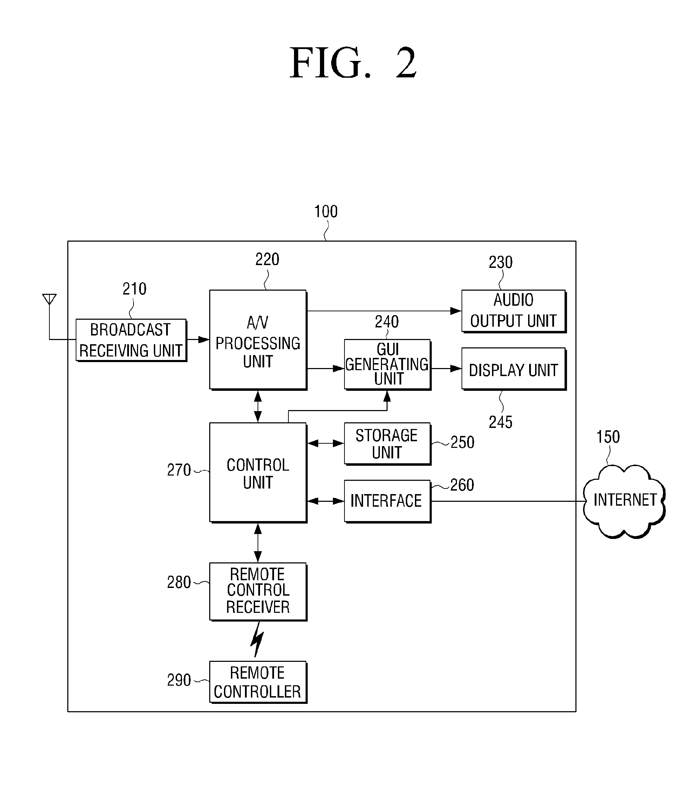

Hereinafter, the configuration of the TV 100 will be described in detail with reference to FIG. 2. FIG. 2 is a detailed block diagram of the TV 100 shown in FIG. 1.

In FIG. 2, the TV 100 comprises a broadcast receiving unit 210, an audio/video (A/V) processing unit 220, an audio output unit 230, a graphical user interface (GUI) generating unit 240, a display unit 245, a storage unit 250, an interface 260, a control unit 270, a remote control receiver 280 and a remote controller 290.

The broadcast receiving unit 210 receives a broadcast from a broadcast station or a satellite via a cable and/or wireless signal, and demodulates the received broadcast. The broadcast received by the broadcast receiving unit 210 comprises a data broadcast signal, such as news, weather reports, stock reports or other information.

The A/V processing unit 220 performs signal processing, such as video decoding, video scaling or audio decoding, on a video signal and audio signal received from the broadcast receiving unit 210 and control unit 270. Additionally, the A/V processing unit 220 transmits the processed video signal and the processed audio signal to the GUI generating unit 240 and the audio output unit 230, respectively.

Alternatively, the A/V processing unit 220 may output the received video and audio signals to the storage unit 250, so that the video and audio signals may be stored in a compressed format in the storage unit 250.

The audio output unit 230 outputs the audio signal transmitted from the A/V processing unit 220 through speakers of the TV 100.

The GUI generating unit 240 generates a GUI to be provided to a user. The GUI generating unit 240 generates GUIs, which indicate an on-screen-display (OSD) menu and OSD items, and adds the generated GUIs to video output from the A/V processing unit 220.

The display unit 245 displays the video output from the A/V processing unit 220. Additionally, the display unit 245 displays video on which the GUIs for the OSD menu and OSD items generated by the GUI generating unit 240 are displayed.

The display unit 245 comprises a content display area and an OSD menu display area. The content display area displays video content such as a broadcast program or movie, and the OSD menu display area displays an OSD menu and OSD items. The OSD menu display area occupies part of a screen of the display unit 245, and the content display area corresponds to areas other than the OSD menu display area. In more detail, the OSD menu display area corresponds to an edge of the screen of the display unit 245, so as not to obscure a user's ability to view video content.

The storage unit 250 stores multimedia content or data information received from the broadcast receiving unit 210. The storage unit 250 also stores multimedia content or data information received via the interface 260.

The storage unit 250 may be a hard disc drive (HDD) or a nonvolatile memory.

The interface 260 connects the TV 100 to the hub site 170 so that the TV 100 can communicate with the hub site 170. Specifically, the interface 260 enables the TV 100 to be connected to the hub site 170 via a communication network such as the Internet 150.

The remote control receiver 280 receives user operation information from the remote controller 290, and transmits the user operation information to the control unit 270.

The control unit 270 determines user commands based on the user operation information received from the remote control receiver 280, and controls the entire operation of the TV 100 according to the user commands.

Additionally, the control unit 270 sets a partial area of the screen of the display unit 245 to be an OSD menu display area in order to prevent an OSD menu or OSD items from covering video currently being viewed by the user. The control unit 270 controls the display unit 245 to display an OSD menu containing a plurality of OSD items on the OSD menu display area.

If a certain event occurs, the control unit 270 may control an event OSD item associated with the event to be displayed using not only the OSD menu display area, but also the other areas of the screen. Here, the other areas may include the content display area.

Here, the event OSD item is generated based on information received via broadcasting or the Internet 150. The event OSD item may be generated after being received in the form of an image via the Internet, or may be generated using required information which is received via the Internet.

Additionally, the event refers to a situation in which important information needs to be displayed as an OSD item. The important information may be information that is deemed to be more important than the video content currently being viewed by the user. For example, if a notice, such as updated information, or an urgent notification, such as a news flash, or help information regarding the OSD menu needs to be displayed using OSD items, the control unit 270 may determine this situation to be such an event.

In more detail, if one OSD item is selected from among a plurality of OSD items appearing on an OSD menu, the control unit 270 may determine this situation to be a first event. If the first event occurs, the control unit 270 may control a first event OSD item containing updated information on the content of the selected OSD item to be displayed using the content display area together with the OSD menu display area.

For example, if a user selects an OSD item 'Movie' from among the plurality of OSD items, the control unit 270 may control an event OSD item containing updated movie information to be displayed on the full screen of the display unit 245.

Additionally, the control unit 270 may determine a situation, in which data information classified in a certain category is received, to be a second event. If the second event occurs, the control unit 270 may control a second event OSD item containing the received data information to be displayed using the content display area together with the OSD menu display area.

For example, if data information regarding a weather warning classified in an emergency category is received, the control unit 270 may control an event OSD item containing the weather warning to be displayed on the full screen of the display unit 245.

Additionally, if a predetermined period of time has elapsed after one of the plurality of OSD items has been selected by highlighting, the control unit 270 may determine this situation to be a third event. If the third event occurs, the control unit 270 may control a third event OSD item containing help information regarding the selected OSD item to be displayed using the content display area together with the OSD menu display area.

For example, if about 10 seconds have elapsed after an OSD item 'Movie' has been selected by highlighting, the control unit 270 may control an event OSD item containing help information regarding functions of the selected 'Movie' item to be displayed on the full screen of the display unit 245.

In this situation, it may be determined that a user may not know the functions of the selected item well, so he or she keeps the item on the screen for a predetermined period of time.

Furthermore, the control unit 270 may determine a situation in which there is no image displayed on the screen of the display unit 245 to be an event, so that an event OSD item associated with the event may be displayed on the full screen of the display unit 245. Additionally, the control unit 270 may determine a situation in which a screen saver function is required to prevent screen burning to be an event, and may control an event OSD item to be displayed on the full screen of the display unit 245.

The event OSD item comprises text, images, or animations which are associated with an event. For example, to display updated movie information, an event OSD item may display information on the updated movie title, and an animation, such as popping popcorn, may also be displayed. Additionally, an event OSD item for providing a weather warning may display a map image, on which weather reports appear, as well as weather-related animations.

The control unit 270 controls an alarm sound to be output when an event occurs. Such an alarm sound enables the user to more easily recognize an OSD item.

The control unit 270 controls an event OSD item associated with an event to be generated based on information received via broadcasting or the Internet 150. In more detail, the control unit 270 may receive both content and graphic representations of an event OSD item in a complete form via broadcasting or the Internet 150, and may then control the received event OSD item to be displayed on the display unit 245.

Additionally, the control unit 270 may receive only content of an event OSD item via broadcasting or the Internet, and may generate graphic representations of the event OSD item, so that the event OSD item may be displayed in a complete form on the display unit 245.

As described above, various OSD items may be displayed using the OSD menu display area together with the other areas through the operations of the control unit 270. Accordingly, it is possible to increase user recognition of OSD items containing notices or urgent notifications.

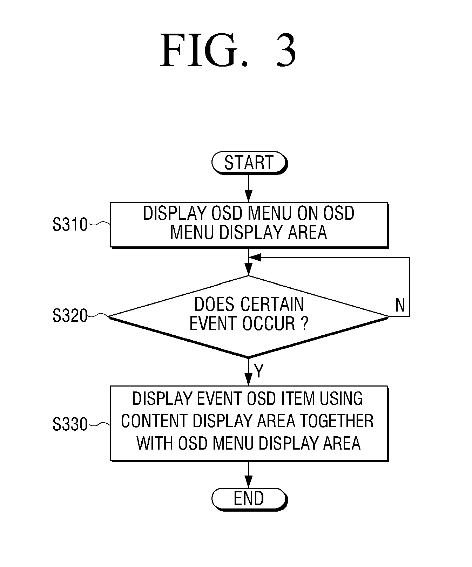

Hereinafter, a process by which the TV 100 displays OSD items will be described in detail with reference to FIG. 3. FIG. 3 is a flowchart explaining a process for displaying OSD items according to an exemplary embodiment of the present invention.

The TV 100 displays an OSD menu on an OSD menu display area corresponding to a partial area of the screen (S310). The OSD menu comprises at least one OSD item.

The TV 100 then determines whether a certain event occurs (S320). An event may occur when information more important than a broadcast program currently being viewed by the user needs to be displayed through an OSD item. For example, if a notice, such as updated information, or an urgent notification, such as a news flash, or help information regarding the OSD menu needs to be displayed using OSD items, the TV 100 may determine this situation to be an event.

In more detail, if one OSD item is selected from among the plurality of OSD items appearing on the OSD menu, the TV 100 may determine this situation to be a first event. If the first event occurs, the TV 100 may control a first event OSD item containing updated information on content of the selected OSD item to be displayed using the content display area together with the OSD menu display area.

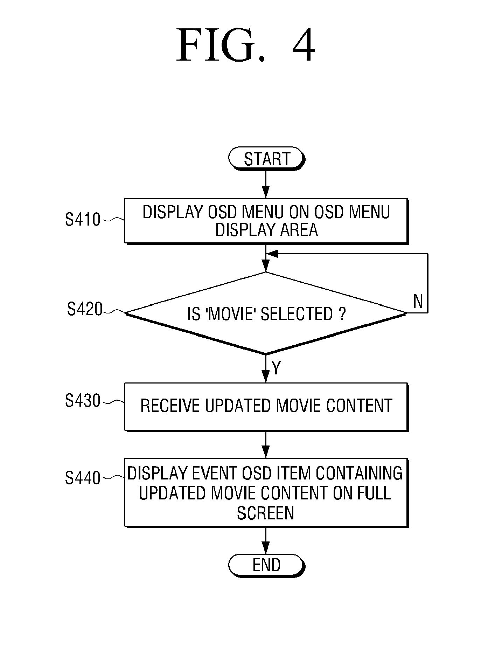

For example, if a user selects an OSD item 'Movie' from among the plurality of OSD items, the TV 100 may control an event OSD item containing updated movie information to be displayed on the full screen. This process will be later described in detail with reference to FIGS. 4 to 6.

Additionally, the TV 100 may determine a situation, in which data information classified in a certain category is received, to be a second event. If the second event occurs, the TV 100 may control a second event OSD item containing the received data information to be displayed using the content display area together with the OSD menu display area.

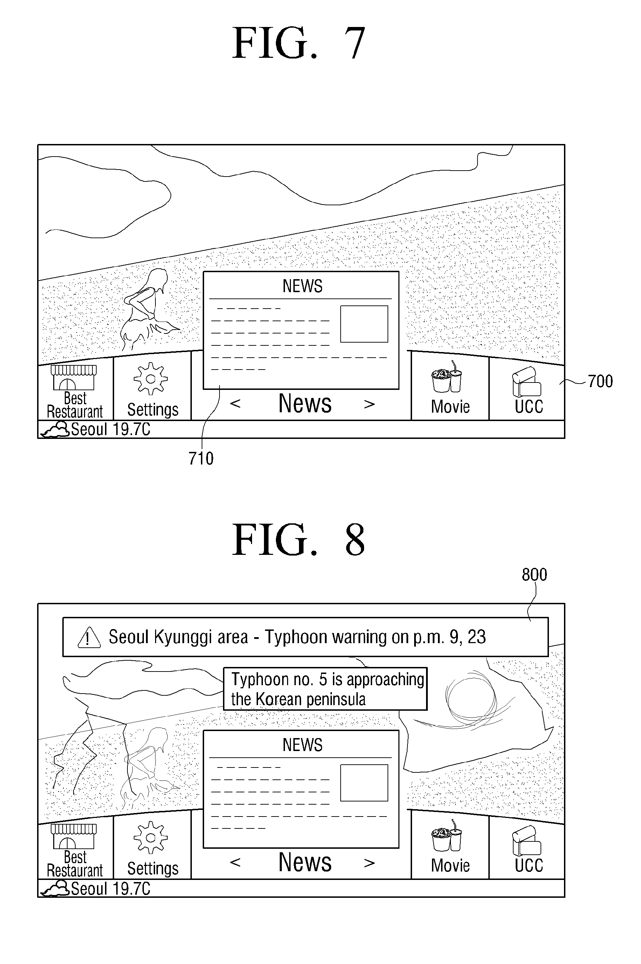

For example, if data information regarding a weather warning classified in an emergency category is received, the TV 100 may control an event OSD item containing the weather warning to be displayed on the full screen. This process will be later described in detail with reference to FIGS. 7 and 8.

Additionally, if a predetermined period of time has elapsed after one of the plurality of OSD items has been selected by highlighting, the TV 100 may determine this situation to be a third event. If the third event occurs, the TV 100 may control a third event OSD item containing help information regarding the selected OSD item to be displayed using the content display area together with the OSD menu display area.

For example, if about 10 seconds have elapsed after an OSD item 'Movie' has been selected by highlighting, the TV 100 may control an event OSD item containing help information regarding functions of the selected 'Movie' item to be displayed on the full screen.

In this situation, it may be determined that a user may not know the functions of the selected item well, so he or she keeps the item on the screen for a predetermined period of time.

Furthermore, the TV 100 may determine a situation in which there is no image displayed on the screen of the display unit 245 to be an event, so that an event OSD item associated with the event may be displayed on the full screen. Additionally, the TV 100 may determine a situation, in which a screen saver function is required to prevent screen burning, to be an event, and may control an event OSD item associated with the event to be displayed on the full screen.

If it is determined that a certain event occurs (S320-Y), the TV 100 displays an event OSD item using the content display area together with the OSD menu display area (S330).

The event OSD item comprises text, images, or animation which are associated with an event. For example, to display updated movie information, an event OSD item may display information on the title of updated movie, and an animation, such as popping popcorn, may also be displayed. Additionally, an event OSD item for providing a weather warning may display a map image, on which weather reports appear, and weather-related animations.

The TV 100 controls an alarm sound to be output when an event occurs. Such an alarm sound enables the user to more easily recognize that an OSD item is being displayed.

The TV 100 controls an event OSD item to be generated based on information received via broadcasting or the Internet 150. In more detail, the TV 100 may receive an event OSD item in a complete form via broadcasting or the Internet 150, and may then control the received event OSD item to be displayed on the screen.

Additionally, the TV 100 may receive only content of an event OSD item via broadcasting or the Internet 150, and may generate graphic representations of the event OSD item, so that the event OSD item in a complete form may be displayed on the screen.

Hereinafter, a situation in which an OSD item 'Movie' is selected from among the plurality of OSD items will be described with reference to FIGS. 4 to 6. FIG. 4 is a flowchart explaining a process by which the TV 100 displays updated movie information when an OSD item 'Movie' is selected, according to an exemplary embodiment of the present invention.

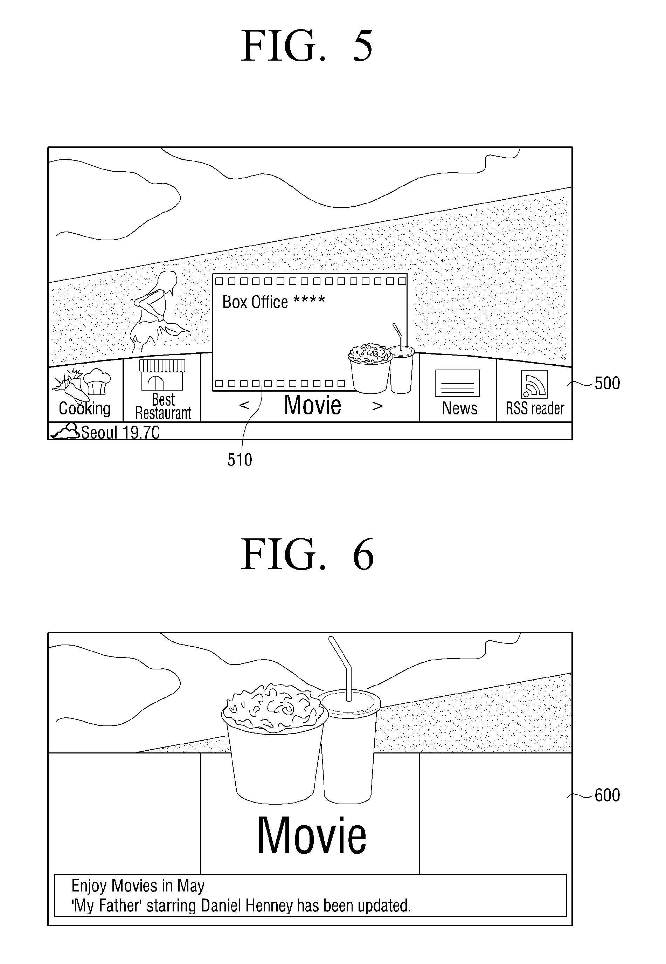

FIG. 5 illustrates a screen showing an OSD menu 500 and 'Movie' item 510, and FIG. 6 exemplarily illustrates an event OSD item 600 containing updated movie content according to an exemplary embodiment of the present invention.

The TV 100 displays the OSD menu 500 on an OSD menu display area (S410). As shown in FIG. 5, the OSD menu 500 comprises a plurality of OSD items, for example, 'Cooking', 'Best Restaurant', 'Movie', 'News', and 'RSS reader', and an OSD item 'Weather' ("Seoul 19.7C") is displayed below the OSD menu 500.

The 'Movie' item 510 is highlighted on the center of the OSD menu 500 as shown in FIG. 5, so it is possible to distinguish the 'Movie' item 510 from the other OSD items on the OSD menu 500.

An area of the screen on which the OSD menu 500 and the 'Movie' item 510 are displayed corresponds to the OSD menu display area.

Subsequently, the TV 100 determines whether the 'Movie' item 510 is selected (S420). In this situation, the TV 100 recognizes the selection or non-selection of the 'Movie' item 510 to be an event. If it is determined that the 'Movie' item 510 is selected (S420-Y), the TV 100 receives information regarding whether movie content has been updated, via broadcasting or the Internet 150 (S430).

The TV 100 displays the event OSD item 600 containing updated movie content on the full screen (S440).

If the event OSD item 600 containing updated movie content is displayed on the full screen, and covers the screen currently viewed by the user, as shown in FIG. 6, the user may more easily recognize the event OSD item 600.

The process by which the TV 100 determines a situation in which the 'Movie' item 510 is selected to be an event and displays the event OSD item 600 has been described with reference to FIGS. 4 to 6.

Hereinafter, a process by which the TV 100 displays an event OSD item 800 associated with the news will be described in detail with reference to FIGS. 7 and 8. FIG. 7 illustrates a screen showing an OSD menu 700 and an OSD item 'News' 710 according to another exemplary embodiment of the present invention.

The 'News' item 710 is highlighted on the center of the OSD menu 700 as shown in FIG. 7, so it is possible to distinguish the 'News' item 710 from the other OSD items on the OSD menu 700.

An area of the screen on which the OSD menu 700 and the 'News' item 710 are displayed corresponds to the OSD menu display area. In this exemplary embodiment of the present invention, the 'News' item 710 is displayed on only a fixed area of the OSD menu display area.

However, if data information regarding a weather warning classified in the emergency category is received, the TV 100 displays an event OSD item 800 containing the received data information on the full screen, as shown in FIG. 8.

FIG. 8 exemplarily illustrates the event OSD item 800 displayed on the screen. If the weather warning is received, the TV 100 displays the event OSD item 800 regarding the received weather warning.

The event OSD item 800 of FIG. 8 may comprise text information regarding the weather warning, an image representing the Korean peninsula, and an animation of a typhoon, so it is possible for the user to more intuitively know that a typhoon is approaching the Korean peninsula. Additionally, the event OSD item 800 of FIG. 8 covers the screen currently viewed by the user, so it is possible for the user to more easily recognize the event OSD item 800.

As described above, the event OSD item is displayed using the OSD menu display area along with the content display area, so it is possible to increase user recognition of the event OSD item.

While both the OSD menu display area and content display area are used to display the event OSD item in the exemplary embodiments of the present invention, the present invention is also applicable to a situation in which the OSD menu display area is enlarged. For example, if an event occurs, the control unit 270 of the TV 100 may cause the OSD menu display area to be enlarged so that an event OSD item may be displayed on the enlarged OSD menu display area.

Additionally, a display apparatus to which the present invention is applicable is implemented as the TV 100 in order to facilitate understanding of the present invention, but the present invention is applicable to other display apparatuses, for example a personal multimedia player (PMP), a digital multimedia broadcasting (DMB) receiving apparatus, a mobile phone or a personal computer (PC).

As described above, according to various exemplary embodiments of the present invention, if a certain event occurs, an event OSD item associated with the event may be displayed using an OSD menu display area along with a content display area. Therefore, it is possible to provide a user with an OSD menu that increases user recognition of important information.

Additionally, the event OSD item may be displayed on the full screen and cover video content, so the user may focus on the event OSD item instead of the video content.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method by which a display device comprising a content display area and an on-screen-display (OSD) menu display area displays OSD items, the method comprising:
displaying an OSD menu containing a plurality of OSD items on the OSD menu display area;
displaying an event OSD item associated with an event of an OSD item among the plurality of OSD items on at least one of the OSD menu display area and content display area, when the event occurs,
wherein the event OSD item is displayed based on information received from an information source.

2. The method as claimed in claim 1, wherein the displaying of the event OSD item comprises displaying the event OSD item on a full screen of the display device, the full screen comprising the content display area and the OSD menu display area.

3. The method as claimed in claim 1 or 2, wherein the event OSD item comprises at least one of text, images, and animations associated with the event.

4. The method as claimed in any one of claims 1 to 3, further comprising:
outputting an alarm sound when the event is detected.

5. The method as claimed in any one of claims 1 to 4, further comprising: detecting that the OSD item is selected from among the plurality of OSD items, the selecting the OSD item being a first event, and
wherein the displaying of the event OSD item comprises displaying a first event OSD item containing updated information on content of the selected OSD item on at least one of the OSD menu display area and the content display area, when the first event occurs.

6. The method as claimed in any one of claims 1 to 5, further comprising: detecting that information classified by a content provider as a predetermined type of information is received, the receiving the predetermined type of information being a second event, and
wherein the displaying of the event OSD item comprises displaying a second event OSD item containing the received information on at least one of the OSD menu display area and the content display area, when the second event occurs.

7. The method as claimed in any one of claims 1 to 6, further comprising: detecting whether a predetermined period of time has elapsed after the event OSD item has been displayed, the lapse of the predetermined period of time being a third event, and
wherein the displaying of the event OSD item comprises displaying a third event OSD item containing help information regarding the selected OSD item on at least one of the OSD menu display area and the content display area, when the third event occurs.

8. A display device comprising:
a display unit that displays video content on a content display area and displays an on-screen-display (OSD) menu having a plurality of OSD items on an OSD menu display area; and
a control unit that detects an event associated with a first OSD item among the plurality of OSD items and controls the display unit to display an event OSD item associated with the detected event on at least one of the OSD menu display area and content display area, when the event is detected,
wherein the event OSD item is displayed based on information received from an information source.

9. The display device as claimed in claim 8, wherein the control unit controls the event OSD item to be displayed on a full screen of the display unit, the full screen comprising the content display area and the OSD menu display area.

10. The display device as claimed in claim 8 or 9, wherein the event OSD item comprises at least one of text, images, and animations associated with the event.

11. The display device as claimed in any one of claims 8 to 10, wherein the control unit controls an alarm sound to be output when the event is detected.

12. The display device as claimed in any one of claims 8 to 11, wherein the control unit detects whether the first OSD item is selected from among the plurality of OSD items, the selecting the first OSD item being a first event, and controls the display unit to display a first event OSD item containing updated information on content of the first OSD item on the at least one of the OSD menu display area and the content display area, when the first event is detected.

13. The display device as claimed in any one of claims 8 to 12, wherein the control unit detects whether information classified by a content provider as a predetermined type of information is received, the receiving the predetermined type of information being a second event, and controls the display unit to display a second event OSD item containing the received information on the at least one of the OSD menu display area and the content display area, when the second event is detected.

14. The display device as claimed in any one of claims 8 to 13, wherein the control unit detects whether a predetermined period of time has elapsed after the event item has been displayed on the display unit, the lapse of the predetermined period of time being a third event, and controls the display unit to display a third event OSD item containing help information regarding the first OSD item on the at least one of the OSD menu display area and the content display area, when the third event is detected.
